**Europäisches Patentamt**

**European Patent Office**

**Office européen des brevets**

(19)

(11) Veröffentlichungsnummer: **0 050 183**
A1

# (12) EUROPÄISCHE PATENTANMELDUNG

(21) Anmeldenummer: **81103755.5**

(22) Anmeldetag: **15.05.81**

(30) Priorität: **17.10.80  ES 496049**

(43) Veröffentlichungstag der Anmeldung: **28.04.82**
**Patentblatt 82/17**

(84) Benannte Vertragsstaaten: **BE DE FR GB IT NL SE**

(51) Int. Cl.³: **F 03 B  13/12**

(71) Anmelder: **Parra, José Martinez, Calle**
**Salitre 33-1 Edificio Juan XXIII, Cartagena (Murcia) (ES)**

(72) Erfinder: **Parra, José Martinez, Calle Salitre 33-1 Edificio**
**Juan XXIII, Cartagena (Murcia) (ES)**

(74) Vertreter: **Vossius.Vossius.Tauchner.Heunemann.Rauh,**
**Siebertstrasse 4 P.O. Box 86 07 67,**
**D-8000 München 86 (DE)**

(54) **Vorrichtung zur Erzeugung von elektrischer Energie durch Ausnutzung und Steuerung der potentiellen Energie des Meerwassers.**

㊵ Zwischen einer unteren schwimmenden Plattform (1) und einem Hauptdeck (5), die durch Träger (2) und (3) miteinander verbunden sind, befindet sich im Zentrum der Vorrichtung ein Flügelrad (16) mit vertikaler Achse (14), durch die die Bewegungsenergie des Flügelrades (16) auf eine Einrichtung zur Umwandlung von Bewegungsenergie in elektrische Energie übertragen wird, die sich auf dem Hauptdeck (5) befindet. Die Träger (2) weisen unterschiedlich gekrümmte Seitenwände (11) auf. Sie unterteilen die Vorrichtung in mehrere Sektoren und konzentrieren die Bewegung des Wassers in Richtung auf das Flügelrad (16). Am Eingang zu dem Raum, in dem sich das Flügelrad (16) befindet, sind Tore (20) vorgesehen, mit denen der Zutritt und Ausgang des Wassers gesteuert wird.

EP 0 050 183 A1

0050183

VOSSIUS · VOSSIUS · TAUCHNER
HEUNEMANN · RAUH
PATENTANWÄLTE
SIEBERTSTR. 4, 8000 MÜNCHEN 86
TEL. (089) 47 40 75

u.Z.: R 102 EP
   (496 049)
JOSE MARTINEZ PARRA
Cartagena, Murcia, Spanien          15. Mai 1981

" Vorrichtung zur Erzeugung von elektrischer Energie durch
   Ausnutzung und Steuerung der potentiellen Energie des
   Meerwassers "


Gegenstand der Erfindung ist eine Vorrichtung zur Erzeugung
von elektrischer Energie durch Ausnutzung und Steuerung der
Energie des Meereswassers.

Die Umwandlung der Bewegungsenergie eines sich drehenden
Flügelrades oder Rotors mittels eines Generators in elektrische Energie ist bekannt. Wenn jedoch das Flügelrad oder
der Rotor durch das Meereswasser in eine Drehbewegung versetzt werden soll, ergeben sich eine Reihe von Schwierigkeiten, wenn die Erzeugung von elektrischer Energie in
größerem Maßstab beabsichtigt ist. Dann sind nämlich großdimensionierte Anlagen erforderlich, um eine ausreichende
Menge an bewegtem Wasser und damit an Energie erfassen zu
können. Insbesondere infolge der ungleichmäßigen Stärke der
Bewegungen des Meereswassers treten bei Anlagen mit großen
Dimensionen erhebliche Probleme mit der Stabilität der Anordnungen auf. Bei starkem Seegang besteht überdies die Gefahr, daß großdimensionierte Anlagen zerstört werden, falls
sie nicht über ausreichende Stabilität verfügen.

Die Gewinnung von elektrischer Energie durch Ausnutzung der
Energie des Meereswassers ist derzeit aus den vorstehend
genannten Gründen auf Anlagen beschränkt, in denen die
potentielle Energie des durch die Flut angehobenen Wassers
beim Rückströmen ausgenutzt wird. Derartige Gezeitenkraftwerke sind jedoch auf wenige Stellen der Meeresküsten beschränkt, an denen ein ausreichender Unterschied in der Wasserhöhe zwischen Ebbe und Flut besteht.

Der Erfindung liegt die Aufgabe zugrunde, eine Vorrichtung zur Erzeugung von elektrischer Energie durch Ausnutzung und Steuerung der Energie des Meereswassers zu schaffen, die in stabiler Bauweise als großdimensionierte Anlage ausgeführt werden kann und bei der die Strömungen und Bewegungen des Meereswassers unabhängig von Ebbe und Flut zur Energiegewinnung ausgenutzt werden können, und zwar unabhängig von der Richtung, aus der die Bewegungen oder Strömungen des Meereswassers kommen. Die angestrebte Vorrichtung soll überdies ausreichende Stabilität aufweisen, um auch schwerem Seegang standhalten zu können. Diese Aufgabe wird durch die Erfindung gelöst.

Gegenstand der Erfindung ist demnach eine Vorrichtung zur Erzeugung von elektrischer Energie durch Ausnutzung und Steuerung der Energie des Meereswassers, die gekennzeichnet ist durch eine untere schwimmende Plattform und ein Hauptdeck, die durch Träger miteinander verbunden sind, und ein im Zentrum der Vorrichtung zwischen der unteren Plattform und dem Hauptdeck angeordnetes Flügelrad, das eine vertikale Achse aufweist, durch die die Bewegungsenergie des Flügelrades auf eine Einrichtung zur Umwandlung von Bewegungsenergie in elektrische Energie übertragen wird.

Die Vorrichtung der Erfindung ermöglicht die Erzeugung von elektrischer Energie durch Ausnutzung und Steuerung der Energie des Meereswassers in wirtschaftlicher Weise, da durch die Vorrichtung eine Regulierung und Konzentration der Bewegungen des Wassers in Richtung auf das Flügelrad erreicht wird. Infolge der Konzentrierung gelangt das Wasser in der Vorrichtung der Erfindung mit einer im Vergleich zur Umgebung erheblich erhöhten Geschwindigkeit auf das Flügelrad. Durch die an den Eingängen zum Raum des Flügelrades vorgesehenen Tore kann der Zutritt des Wassers je nach Bedarf gesteuert werden. Ein besonders wesentliches Merkmal der Erfindung besteht schließlich darin, daß das Wasser durch die

0050183

Konstruktion der Vorrichtung, insbesondere die Krümmung der
Seitenwände der Träger in Richtung auf die konkaven Flächen
der Flügel des Flügelrades geleitet und konzentriert wird.
Schließlich ist auch das Flügelrad selbst durch seine Konstruktion ein wesentliches Merkmal der Erfindung, da es
zur Verbindung der Flügel untereinander und mit der Achse
großdimensionierte horizontale Platten aufweist, die gleichzeitig als Schwungräder wirken.

Infolge ihrer stabilen Bauart ermöglicht die Vorrichtung
der Erfindung eine Ausführung in verhältnismäßig großer
Dimension und damit die Gewinnung einer erheblichen Menge
an elektrischer Energie durch Nutzbarmachung einer großen
Menge an Energie des bewegten Meereswassers. Die Reibungsverluste der Vorrichtung der Erfindung werden durch die
vorgesehene Ausführung des Flügelrades möglichst gering gehalten, so daß ein hoher Wirkungsgrad der Umwandlung der
Bewegungsenergie des Flügelrades in elektrische Energie
erreicht werden kann.

Eine Ausführungsform der Vorrichtung der Erfindung zur
Erzeugung von elektrischer Energie durch Ausnutzung und
Steuerung der Energie des Meereswassers ist in den beiliegenden Figuren dargestellt. Es zeigen:

Figur 1 eine Seitenansicht;

Figur 2 einen vertikalen Querschnitt durch die Vorrichtung längs
der Linie A-A von Figur 3

Figur 3 einen horizontalen Querschnitt durch die Vorrichtung in Höhe
der Linie B-B von Figur 2; und

Figur 4 einen horizontalen Querschnitt durch die Vorrichtung in
Höhe der Linie C-C von Figur 2.

Die Vorrichtung der Erfindung zur Erzeugung von elektrischer
Energie durch Ausnutzung und Steuerung der Bewegung des
Meereswassers wird vorzugsweise an Orten aufgestellt, die
geographisch für das Vorherrschen von verhältnismäßig starken Bewegungen oder Strömungen des Meereswassers bekannt
sind, beispielsweise in der Nähe von Landzungen und Küstenvorsprüngen mit ausreichender Tiefe und geeigneter Entfernung von der Küste. Der Grund für letzteres Erfordernis besteht darin, daß die Länge der unterseeischen Kabel, welche die gewonnene elektrische Energie zu den Transformatoren leiten, die sich auf dem Festland befinden, möglichst kurz gehalten wird.

Die Vorrichtung der Erfindung besteht aus einem Schwimmkörper aus Metall, der ein Höchstmaß an Sicherheit bietet. Sie wird nachstehend anhand einer bevorzugten Ausführungsform erläutert, bei der die untere schwimmende Plattform eine viereckige Oberfläche aufweist und sich auf ihr vier schwimmende Hauptträger befinden, die die Vorrichtung in vier Sektoren unterteilen. Die Erfindung ist jedoch nicht auf diese Ausführungsform beschränkt, sondern es sind auch andere polygonale Formen der Vorrichtung mit einer entsprechenden Anzahl von Trägern und Sektoren möglich und Gegenstand der Erfindung.

Die Bugteile der Träger gehen von jeder Ecke der schwimmenden Plattform aus und sind radial auf das Zentrum der Anlage hin ausgerichtet. In der Mitte jeder Seite der schwimmenden Plattform befinden sich weitere vier schwimmende Träger, die einen Teil des gesamten Aufbaus bilden. Sie weisen geringere horizontale Oberflächen auf als diejenigen, welche die Sektoren teilen. Sie stehen senkrecht zur betreffenden Seite der unteren Plattform.

Am oberen Ende sind die Träger mit dem Hauptdeck verbunden, das ebenfalls eine viereckige Oberfläche aufweist. Neben anderen Funktionen verbindet und verspreizt das Hauptdeck den ganzen Aufbau der schwimmenden Träger. Auf diesem Hauptdeck befindet sich die Hauptebene der Maschinenanlage einschließlich der Generatoren zur Erzeugung der elektrischen Energie. Ihre Oberfläche ist kreisförmig und ihr Dach wird von einer Kuppel gebildet, deren Bauform so gestaltet ist, daß sie dem Wind möglichst wenig Widerstand
bietet und daß sie gleichzeitig die Versteifung der gesamten schwimmenden Anlage im kreisförmigen Sinn verstärkt.

Die Hauptebene der Maschinenanlage ist in ihrem gesamten
äußeren Umfang von einem weiten Deck umgeben, welches Teil
der Struktur des gesamten Aufbaus ist und die Funktion
eines Kais für jede Art von Seefahrzeugen hat, die beispielsweise irgendwelche Maschinen der Anlage transportieren müssen.

Zwischen der unteren schwimmenden Plattform und dem Hauptdeck befindet sich innerhalb eines Raumes mit vier Toren
zum Öffnen oder Schließen für den Ein- und Austritt des
bewegten Wassers ein Flügelrad. Die Oberseite der unteren
schwimmenden Plattform und die Unterseite des Hauptdecks
weisen eine gegenüber dem Meeresspiegel geneigte, in Richtung auf das Zentrum der Vorrichtung hin nach oben bzw.
unten zusammenlaufende Form auf. Dadurch sorgen sie zusammen mit den verschieden gekrümmten Seitenwänden der schwimmenden Träger, welche die Anlage in vier Sektoren aufteilen, für eine Regulierung und Konzentration der Bewegungen
des Meerwassers in Richtung auf den Raum, in dem sich das
Flügelrad befindet.

Die Teilung der Vorrichtung der Erfindung in vier Zonen,
welche sich zwischen der unteren schwimmenden Plattform und
dem Hauptdeck befinden, erlaubt eine feste Anbringung des
schwimmenden Elektrizitätswerkes, da dieses die Strömungen
oder Bewegungen des Meereswassers unabhängig von der Richtung aufnimmt, aus der sie kommen. Die Vorrichtung der Erfindung ist an dem Ort, wo sie sich befindet, mit vier
großen Zementblöcken verankert, die vorher auf dem Festland
hohl gefertigt wurden, um sie schwimmend zu ihrem Bestimmungsort zu bringen und dort mit der entsprechenden Füllung
fertigzustellen. Dabei werden sie auf den Meeresboden abge-

senkt, nachdem die entsprechenden Verankerungsringe und
Signaleinrichtungen eingebaut wurden.

Zur Steuerung der Menge und Energie des bewegten Meereswassers sind in der Vorrichtung der Erfindung vier Schiebetore vorgesehen, die mechanisch oder hydraulisch betätigt
werden. Jeweils eine befindet sich in jedem Sektor am Eingang des Raumes in dem sich das Flügelrad oder der Rotor
befindet. Damit läßt sich beispielsweise, wenn der Wellengang oder die Meeresströmungen auf den nördlichen Sektor
auftreffen, durch dessen Tor der Eintritt des Wassers nach
seiner Geschwindigkeit oder Stärke regulieren. Die Tore
der Sektoren, die nach Osten und Westen gerichtet sind,
bleiben in diesem Fall geschlossen. Das Tor des südlichen
Sektors wird in dem Maße offengehalten, das erforderlich
ist, um sehr annäherungsweise eine konstante Umdrehungszahl des Flügelrades zu erreichen, das sich in dem genannten Raum befindet und das Kernstück des Antriebs der Vorrichtung der Erfindung zur Erzeugung von elektrischer
Energie darstellt.

Von besonderer Bedeutung innerhalb der Vorrichtung der Erfindung ist demnach die Konstruktion des Schwimmkörpers
mit den folgenden Hauptelementen:
a) Die untere schwimmende Plattform, deren Oberseite von
   außen in Richtung auf das Zentrum der Vorrichtung ansteigt;
b) Das Hauptdeck, dessen Unterseite von außen in Richtung
   auf das Zentrum der Anlage nach unten verläuft;
c) Die Hauptträger, die zwischen der unteren schwimmenden
   Plattform und dem Hauptdeck senkrecht zu diesen angeordnet und mit ihnen verbunden sind und die radial von
   den Ecken der unteren schwimmenden Plattform bzw. des
   Hauptdeckes aus in Richtung auf das Zentrum der Anlage
   hin verlaufen;

d) Das Flügelrad mit vertikaler Achse und in horizontaler
   Richtung gekrümmten Flügeln oder Schaufeln, das im
   Zentrum der Vorrichtung zwischen der unteren schwimmenden Plattform und dem Hauptdeck angeordnet ist in einem
   Raum, der teilweise von den Wänden der Hauptträger begrenzt wird;

e) Die unterschiedliche Krümmung der Seitenwände der Hauptträger, die für die Regulierung und Konzentrierung des
   bewegten Wassers in Richtung auf die konkaven Oberflächen der Flügel des Flügelrades sorgen;

f) Die Tore, die an den Eingängen zu dem Raum vorgesehen
   sind, in dem sich das Flügelrad befindet, und die durch
   ihre Öffnung bzw. Schließung die Steuerung des Zutritts
   des Wassers zum Flügelrad ermöglichen, wobei sie beim
   Öffnen in Schlitzen verschwinden, die in den Hauptträgern vorgesehen sind.

Die vorstehend erläuterte Bauweise des Schwimmkörpers der
erfindungsgemäßen Vorrichtung ermöglicht infolge der weiten Öffnungen der Sektoren an ihrer Außenseite die Aufnahme
einer großen Menge Meereswasser, dessen Bewegung bzw.
Strömung durch die rasche Abnahme des Querschnittes seines
Strömungsweges stark beschleunigt wird. Damit wird auch
bei einem Wellengang, der in der Umgebung der Anlage als
verhältnismäßig schwach erscheint, die Nutzbarmachung einer
großen Menge an Bewegungsenergie und ihre Umwandlung in
elektrische Energie in wirtschaftlicher Weise ermöglicht.

Das Flügelrad im Zentrum der Vorrichtung der Erfindung besteht aus zerlegbaren Elementen. Seine Flügel oder Schaufeln sind in horizontaler Richtung gekrümmt. Ihre Anzahl
ist nicht besonders begrenzt. Bevorzugt sind jedoch Flügelräder mit einer größeren Zahl von Flügeln, beispielsweise
mindestens 10. Besonders bevorzugt ist eine Ausführungsform mit 12 Flügeln. Die Flügel sind mit ihrer zentralen
Achse verbunden und durch Platten aus Stahl horizontal versteift, welche zugleich die Funktion von Schwungrädern haben und dem Flügelrad eine höhere Trägheit verleihen. Auch die Anzahl dieser versteifenden Platten ist nicht besonders begrenzt. Eine Ausführungsform der Erfindung weist beispielsweise vier derartige Platten auf. An ihrer Unterkante werden die Flügel auf Lagerstreifen gehalten, die der Führung des Flügelrades bei seiner Drehung dienen. Sie sind mit dem Aufbau derart verbunden, daß die Reibung des Flügelrades auf diesen Schienen so gering wie möglich ist, während gleichzeitig große Sicherheit in Führung und Stabilität erreicht wird.

Zur Übertragung der Bewegungsenergie des Flügelrades dient seine zentrale Achse. Diese ist an ihrem unteren Ende in einem Lager abgestützt, das sich in der unteren schwimmenden Plattform befindet. Mit ihrem oberen Ende durchstößt die Achse das Hauptdeck. Auch in diesem Bereich sind Lager für das reibungsvermindernde Drehen der Achse vorgesehen. Die Achse endet in einem zentralen Getriebe auf dem Maschinendeck der Vorrichtung. Von diesem wird die Bewegung über horizontale Achsen auf Einrichtungen zur automatischen Steuerung der Drehzahl des Flügelrades und/oder der nachgeschalteten Generatoren zur Erzeugung von elektrischer Energie übertragen, um optimale Betriebsbedingungen im Hinblick auf die gegebene Stärke der Bewegung des Meereswassers zu erzielen. Falls diese Generatoren Gleichstromgeneratoren sind, können ihnen elektro-mechanisch oder elektronisch arbeitende Wechselstromerzeuger, wie Gleichstrom-Wechselstrom-Wandler (Gleichstrommotor mit nachgeschaltetem Wechselstromgenerator) oder Wechselrichter, nachgeschaltet werden. Die erzeugte Energie wird über unterseeische Kabel zu einem Transformatorenpark verbracht, der sich auf dem Festland befindet.

Die Vorrichtung der Erfindung wird nun anhand der in der Zeichnung dargestellten Ausführungsform näher erläutert.

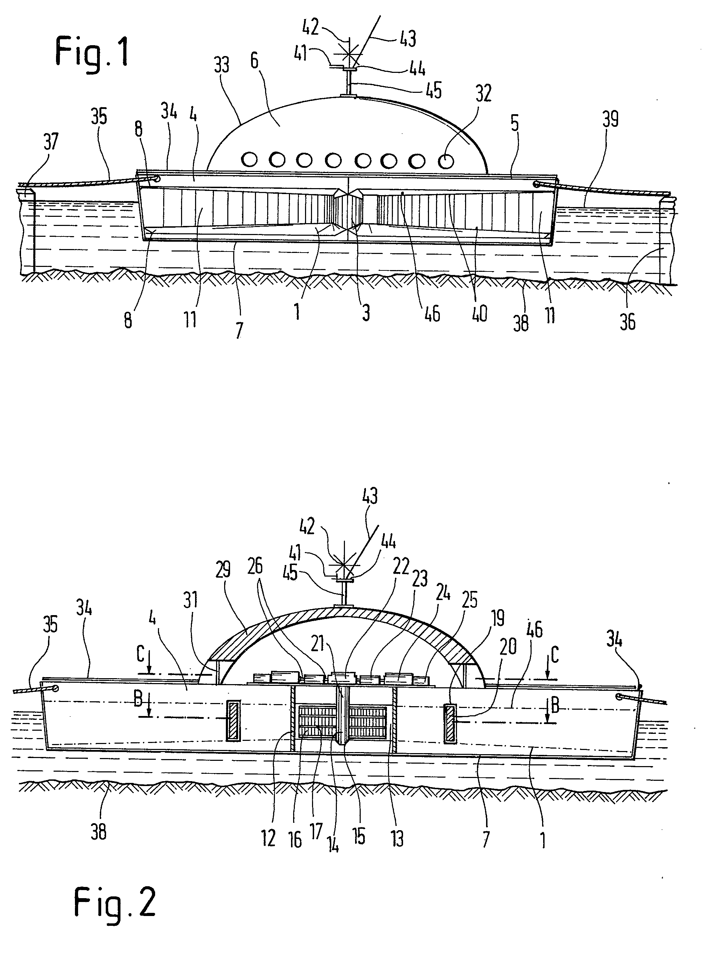

Figur 1 zeigt schematisch eine Seitenansicht der Vorrichtung der Erfindung mit Blick auf die Öffnung eines von vier Sektoren. Mit 1 ist die untere schwimmende Plattform bezeichnet, die den Boden der Vorrichtung bildet.

Auf ihr befinden sich die Hauptträger 2, von denen
zwei Seitenwände 11 zu sehen sind. Mit 3 ist einer der
zusätzlichen Träger bezeichnet, die sich in der Mitte jeder Seite der unteren schwimmenden Plattform befinden und
die Oberseite der unteren Plattform 1 mit der Unterseite
des Hauptdecks 5 verbinden. Sie dienen der Stabilisierung
der gesamten Anlage. Mit 4 sind die Verstärkungen des
Hauptdecks 5 bezeichnet, die unter anderem der Verbindung
und Verstrebung des gesamten Aufbaues der Träger 2 und 3
dienen. Durch diesen strukturellen Aufbau wird die Stabilität der Anlage erreicht. Das Hauptdeck 5 ist zugleich
Abdeckung des schwimmenden Teils der Vorrichtung. Es enthält die Plattform, auf der sich der Maschinenpark zur
Erzeugung von Elektrizität befindet. Das Hauptdeck 5 dient
außerdem als Anlegeplatz.

Auf dem Hauptdeck 5 befindet sich ein kuppelförmiger Aufbau 6, der die Maschinenanlage aufnimmt. 7 bezeichnet die
Unterseite der unteren schwimmenden Plattform bzw. den
Kiel des Schwimmkörpers. Zwischen den Trägern 2 und 3 und den in Richtung auf das Zentrum der
Vorrichtung geneigten Oberflächen der unteren Plattform 1
und des Hauptdecks 5 befinden sich Verstärkungen 8 mit
dreieckigem Querschnitt, die den Aufbau zusammenhalten.

In Figur 1 sind die Licht- und Belüftungsöffnungen des
kuppelförmigen Aufbaus 6 mit 32 bezeichnet. 33 steht für
die äußere Oberfläche des kuppelförmigen Aufbaus 6. Eine
um das Hauptdeck umlaufende Reeling trägt die Bezeichnung
34. Die gesamte Vorrichtung ist über Ketten 35 aus Stahl
an Betonblöcken 36 und 37 verankert, die ihrerseits auf
dem Meeresgrund 38 befestigt sind. 39 bezeichnet die Meeresoberfläche.

Mit 40 werden in Figur 1 die Kanten zwischen den schwimmenden Trägern 2 und der unteren schwimmenden Plattform 1 bzw.
dem Hauptdeck 5 bezeichnet, während 46 für die Unterseite
des Hauptdecks 5 steht.

Auf dem kuppelförmigen Aufbau 6 befindet sich ein Mast 45,
der eine Plattform 44 trägt, auf der sich eine Einrichtung
41 zur Messung der Windgeschwindigkeit, ein Leuchtfeuer 42
und eine Nachrichtenantenne 43 befinden.

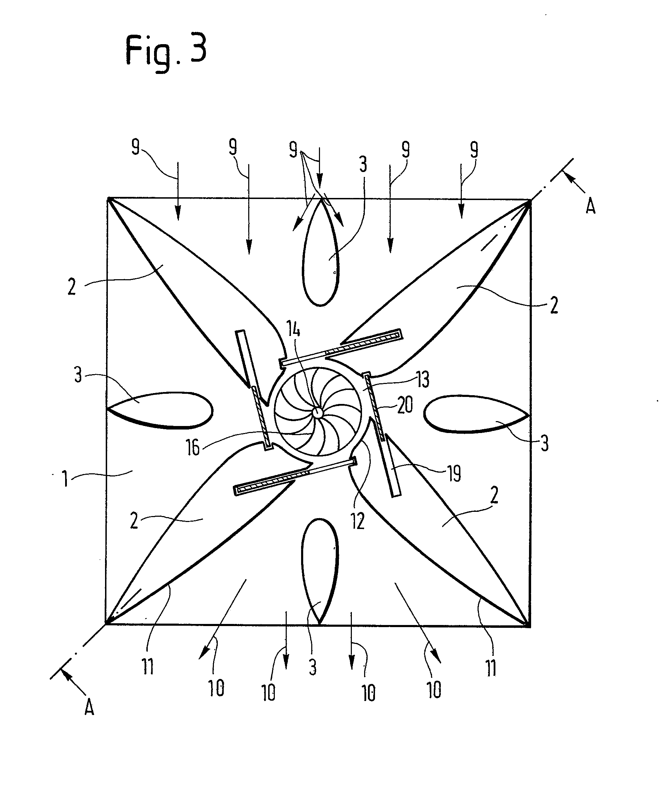

Fig. 2 zeigt schematisch einen vertikalen Querschnitt durch
die Vorrichtung der Erfindung in diagonaler Richtung längs
der Linie A-A von Figur 3. In dieser Figur ist das Flügelrad
16 mit seiner vertikalen Achse 14 zu sehen. Diese besteht aus
Stahl und ist in einem Lager 15 aus Spezialstahl in der unteren schwimmenden Plattform 1 gelagert. Oberhalb des Flügelrades 16 durchstößt sie das Hauptdeck 5. In diesem Bereich
sind Lager 21 vorgesehen.

Die Flügel oder Schaufeln des Flügelrades 16 sind in horizontaler Richtung gekrümmt. Sie bestehen aus abnehmbaren Teilen aus Spezialstahl, die mit der Achse 14 über Stahlplatten
17 verbunden sind, die in horizontaler Ebene angeordnet sind.
Diese Platten 17 zur Verankerung der Flügel des Flügelrades
16 bestehen aus Spezialstahl. Sie halten die Flügel untereinander und mit der Achse in Verankerung und dienen gleichzeitig als Schwungräder und Elemente der Festigkeit des Flügelrades 16.

12 bezeichnet einen Teil der vertikalen Wände der Träger 2.
Mit 20 sind die Schiebetore bezeichnet, die sich in den
Schlitzen 19 befinden. Die Anordnung dieser Elemente wird im
Zusammenhang mit Figur 3 näher erläutert.

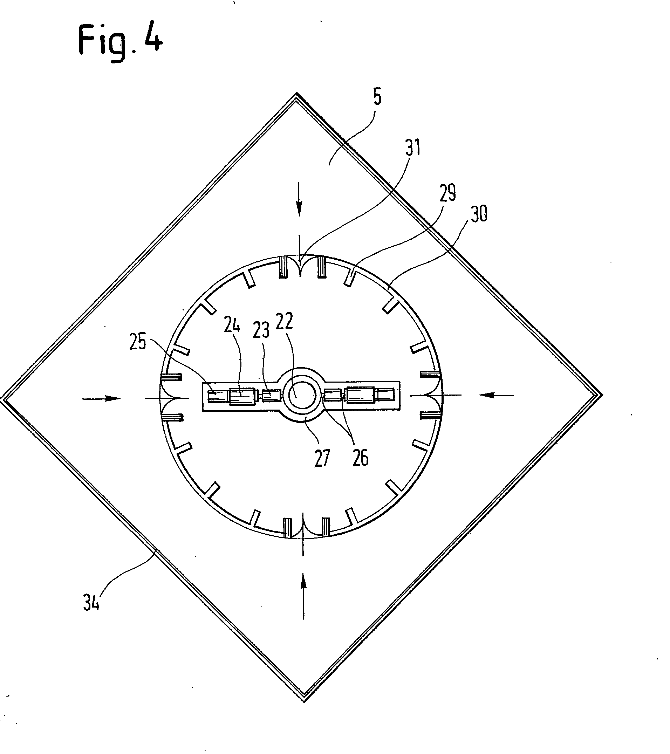

Innerhalb des kuppelförmigen Aufbaus 6, dessen Eingänge in
Figur 2 mit 31 und dessen Stützrippen mit 29 bezeichnet werden, befindet sich der mit 22 bis 26 bezeichnete Maschinenpark, der im Zusammenhang mit Figur 4 näher erläutert wird.

Figur 3 zeigt schematisch einen horizontalen Querschnitt
durch die Vorrichtung der Erfindung in Höhe der Linie B-B
von Figur 2. In dieser Figur sind die Träger 2 und 3 im Querschnitt zu erkennen. Der Eintritt des Wassers in die Vorrichtung wird durch die Pfeile 9, der Austritt durch die
Pfeile 10 angezeigt. Durch die gewölbten vertikalen Seitenwände 11 der Träger 2 erfolgt eine Konzentrierung und
Steuerung des Wassers in Richtung auf den Raum 13, in dem
sich das Flügelrad 16 befindet. Der Raum 13 wird teilweise
von den Bereichen 12 der vertikalen Flächen der Träger 2
und zum anderen Teil von den Schiebetoren 20 begrenzt.
In Figur 3 sind das obere und das untere Schiebetor offen,
während das linke und das rechte geschlossen sind. Dies
entspricht der angegebenen Strömung des Wassers. Beim
Öffnen der Schiebetore 20, das mit mechanischen oder hydraulischen Mitteln bewirkt werden kann, werden diese auf
Schienen bewegt und verschwinden in Schlitzen 19 innerhalb
der Träger 2.

Figur 4 zeigt schematisch einen horizontalen Querschnitt
durch die Vorrichtung der Erfindung in Höhe der Linie C-C
von Figur 2. In dieser Figur ist der kreisförmige Grundriß
30 des kuppelförmigen Aufbaus 6 mit seinen Eingängen 31 und
den tragenden Rippen 29 zu sehen. Dieser kuppelförmige Aufbau befindet sich auf dem Hauptdeck 5, das von der Reeling 34
umgeben ist. In dem kuppelförmigen Aufbau 6 befindet sich
der Maschinenteil der Anlage auf einer Plattform 27, die
vom Rest des Hauptdecks 5 isoliert ist, um Vibrationen absorbieren zu können.

Mittelteil der Maschinenanlage ist ein zentrales Getriebe
22, das die Bewegung der vertikalen Achse 14 des Flügelrades 16 aufnimmt. Von dort gelangt die Bewegungsenergie
über eine horizontale Achse 26 zu Einrichtungen 23 für die
automatische Steuerung der Drehzahl und dann zu Generatoren 24 zur Erzeugung von elektrischer Energie. Mit 25 werden Wechselstromerzeuger und Verbindungskästen für die
Kabel bezeichnet, die die elektrische Energie abführen und
über Untermeereskabel zu einer Transformatorstation leiten,
die sich auf festem Boden befindet.

Das Beispiel erläutert die Erfindung.

B e i s p i e l

In einer konkreten Ausführungsform hat die Vorrichtung zur
Erzeugung von elektrischer Energie durch Ausnutzung und
Steuerung der Energie des Meereswassers die in den Figuren
dargestellte Form. Die untere schwimmende Plattform und das
Hauptdeck weisen quadratische Form auf. Die Vorrichtung
wird durch vier Stützen in vier Sektoren eingeteilt. Die
Öffnung jedes Sektors hat an ihrer Außenseite eine Breite
von etwa 150 m und eine Höhe von etwa 16 m. Diese für den
Eintritt des Wassers offene Fläche verengt sich in Richtung
auf das Zentrum der Anlage, so daß die Öffnung an der Stelle, wo sich das Tor befindet, nurmehr 12 x 12 m ausmacht.
Auf diese Weise wird eine erhebliche Erhöhung der Geschwindigkeit des bewegten Wassers erreicht.

Das Flügelrad im Zentrum der Vorrichtung hat einen Durchmesser von 21 m und eine Höhe von 8 m. Es besteht aus zerlegbaren Elementen und weist 12 Flügel und 4 horizontale
Verstrebungs-Platten auf.

-13- 0050183

<u>P a t e n t a n s p r ü c h e</u>

1. Vorrichtung zur Erzeugung von elektrischer Energie
durch Ausnutzung und Steuerung der Energie des Meereswassers, g e k e n n z e i c h n e t durch eine
untere schwimmende Plattform (1) und ein Hauptdeck (5),
die durch Träger (2) und (3) miteinander verbunden sind,
und ein im Zentrum der Vorrichtung zwischen der unteren
Plattform (1) und dem Hauptdeck (5) angeordnetes Flügelrad (16),
das eine vertikale Achse (14) aufweist, durch die die
Bewegungsenergie des Flügelrades (16) auf eine Einrichtung zur Umwandlung von Bewegungsenergie in elektrische
Energie übertragen wird.

2. Vorrichtung nach Anspruch 1, dadurch gekennzeichnet, daß
die Einrichtung zur Umwandlung von Bewegungsenergie
in elektrische Energie aus einem Getriebe (22), einer
Einrichtung (23) zur automatischen Steuerung der Drehzahl und Generatoren (24) zur Erzeugung der elektrischen
Energie besteht.

3. Vorrichtung nach Anspruch 1 und 2, dadurch gekennzeichnet, daß die Träger (2) Hohlkörper sind, deren seitliche
Wände (11) von außen in Richtung auf das Zentrum der
Anlage hin auseinanderlaufen, dabei in horizontaler
Richtung unterschiedlich gekrümmt sind und sich vor dem
Raum, in dem sich das Flügelrad (16) befindet, wieder
vereinigen, wobei sie den Raum (13) bilden.

4. Vorrichtung nach Anspruch 1 bis 3, dadurch gekennzeichnet, daß das in die Vorrichtung einströmende Wasser
einen Weg mit sich verengendem Querschnitt vorfindet,
der durch die Oberseite der unteren Plattform (1) und
die Unterseite des Hauptdecks (5), welche in Richtung
auf das Zentrum hin trichterförmig nach oben bzw. nach
unten verlaufen, sowie durch die unterschiedlich gewölbten vertikalen Seitenwände (11) von zwei gegenüberliegenden Trägern (2) begrenzt wird und sich in der Öffnung
des Eingangs in den Raum (13) konzentriert, in dem sich
das Flügelrad (16) befindet.

5. Vorrichtung nach Anspruch 1 bis 4, dadurch gekennzeichnet, daß die Krümmung der vertikalen Wände (11) der
Träger (2) derart ausgebildet ist, daß das Wasser auf
die konkaven Oberflächen der Flügel des Flügelrades (16)
geleitet und konzentriert wird.

6. Vorrichtung nach Anspruch 1 bis 5, dadurch gekennzeichnet, daß vier Träger (2) vorgesehen sind, die die Vorrichtung in vier Sektoren unterteilen.

7. Vorrichtung nach Anspruch 1 bis 6, dadurch gekennzeichnet, daß die Öffnung zwischen der unteren Plattform (1)
und dem Hauptdeck (5), sowie den zwei gegenüberliegenden
vertikalen Seitenwänden (11) von zwei Trägern (2) am
Eingang in den Raum (13), in dem sich das Flügelrad (16)
befindet, verschließbar ist.

8.  Vorrichtung nach Anspruch 7, dadurch gekennzeichnet, daß das Verschließen mit Hilfe von Schiebetoren (20) erfolgt, die mechanisch oder hydraulisch bewegt werden.

9.  Vorrichtung nach Anspruch 8, dadurch gekennzeichnet, daß die Schiebetüren (20) beim Öffnen in Schlitzen (19) verschwinden, welche in den Trägern (2) vorgesehen sind.

10. Vorrichtung nach Anspruch 1 bis 9, dadurch gekennzeichnet, daß das Flügelrad (16) aus nur in einer Richtung gekrümmten, zerlegbaren Flügeln besteht, die über horizontale Platten (17) mit der Achse (14) verbunden sind.

11. Vorrichtung nach Anspruch 2 bis 10, dadurch gekennzeichnet, daß den Generatoren (24) Wechselstromerzeuger (25) nachgeschaltet sind.

0050183

1/3

Fig.1

Fig.2

Fig. 3

0050183

2/3

Fig. 4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 152 895 (WIRT) <br> * Spalte 3, Zeile 42 - Spalte 4, Zeile 22; Spalte 8, Zeilen 28-68 * <br><br> -- | 1,2,4,5 |
| | GB - A - 2 001 396 (HAWES) <br> * Seite 1, Zeile 80 - Seite 2, Zeile 101 * <br><br> -- | 1,2,4 |
| | GB - A - 2 041 458 (CAMERON) <br> * Seite 1, Zeile 124 - Seite 3, Zeile 1 * <br><br> -- | 10 |
| | DE - A - 2 730 658 (SCHAFER) <br> * Seite 5, Zeilen 1-17 * <br><br> -- | 7,8 |
| | US - A - 4 228 360 (NAVARRO) <br> * Spalte 7, Zeilen 39-52 * <br><br> ---- | 11 |

**KLASSIFIKATION DER ANMELDUNG (Int. Cl.¹)**

F 03 B 13/12

**RECHERCHIERTE SACHGEBIETE (Int. Cl.³)**

F 03 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31-12-1981 | DE WINTER |

EPA form 1503.1  06.78